# EUROPEAN PATENT APPLICATION

(11) **EP 1 515 460 A1**
(43) Date of publication of application: **16.03.2005**
(21) Application number: 04718422.1
(22) Date of filing: 08.03.2004
(51) Int. Cl.: H04B 7/26, H04Q 7/22, H04L 27/00

(54) **BASE STATION DEVICE AND ADAPTIVE MODULATION METHOD**

(30) Priority: 08.04.2003 JP 2003104405
(71) Applicant: MATSUSHITA ELECTRIC INDUSTRIAL CO., LTD., Kadoma-shi, Osaka 571-8501 (JP)
(72) Inventor: ARAKI, Katsuhiko, Yokohama-shi, Kanagawa 236-0051 (JP); SATO, Takaaki, Yokohama-shi, Kanagawa 235-0041 (JP)
(74) Representative: Grünecker, Kinkeldey, Stockmair & Schwanhäusser Anwaltssozietät
(86) International application number: PCT/JP2004/002956
(87) International publication number: WO 2004/091117

(57) **Abstract**

A base station apparatus which transmits packets always using a modulation and coding scheme suitable for channel quality, and increases the throughput in the radio communication system. In the apparatus, radio reception section 104 receives a radio transmission signal including channel quality information transmitted from a communication terminal apparatus via reception antenna 102, and performs predetermined radio reception processing. Demodulation section 106 demodulates the radio transmission signal subjected to the radio reception processing, and extracts the channel quality information. A setting unit is comprised of channel quality information storage section 108, judgment section 110 and MCS determination section 112, and sets a modulation and coding scheme based on a plurality of received pieces of channel quality information. Adaptive modulation section 114 performs predetermined adaptive modulation processing on transmission data to transmit to the communication terminal apparatus, using the set modulation and coding scheme.

## Description

### Technical Field

The present invention relates to a base station apparatus and adaptive modulation method used in a radio communication system in which high speed downlink packet transmission is carried out.

### Background Art

In recent years, in radio communication fields, attention has been directed toward high speed packet communications such as, for example, an HSDPA (High Speed Downlink Packet Access) system. In the HSDPA system, in order to transmit packets at optimal transmission rates in response to the downlink propagation environment, an adaptive modulation system is used in packet transmission from a base station apparatus.

In a radio communication system using the adaptive modulation system, a communication terminal apparatus measures downlink quality (channel quality), and transmits channel quality information indicative of the measured channel quality to a base station apparatus that is a communicating party. Then, in response to the channel quality information transmitted from the communication terminal apparatus, the base station apparatus switches the modulation and coding scheme (MCS) adaptively, and thereby attains optimal transmission rates (for example, see JP 2002-44168).

However, in implementing the HSDPA system, delay time arises inevitably between a communication terminal apparatus and base station apparatus. The delay time generally includes (1) terminal processing delay time, (2) propagation delay time and (3) base station processing delay time. Herein, the terminal processing delay time is the time elapsed until a communication terminal apparatus transmits the channel quality information since measuring the channel quality. The propagation delay time is the time elapsed until a base station apparatus receives the channel quality information since the communication terminal apparatus transmits the channel quality information. The base station processing delay time is the time elapsed until the base station apparatus performs packet transmission using a modulation and coding scheme based on the channel quality information since receiving the channel quality information.

Accordingly, when the channel quality momentarily varies at the time of measuring the channel quality, it is extremely difficult to perform packet transmission using a modulation and coding scheme suitable for the channel quality.

Meanwhile, in a conventional base station apparatus and adaptive modulation system, since the above-mentioned delay time is not considered, control of the adaptive modulation system sometimes reacts with excessive sensitivity in response to variations in channel quality. In other words, even when variations in channel equality are momentary, a modulation and coding scheme may be switched based on the channel quality information indicative of the momentary channel quality. Accordingly, a possibility increases that a suitable modulation and coding scheme is not set in response to the channel quality at the time of transmitting a packet, resulting in certain limitations in increases in throughput in the radio communication system.

### Disclosure of Invention

It is an object of the present invention to provide a base station apparatus and adaptive modulation method capable of transmitting packets always using a modulation and coding scheme suitable for channel quality and of increasing the throughput in the radio communication system.

According to an aspect of the invention, a base station apparatus has a receiving section that receives channel quality information transmitted from a communication terminal apparatus, and a setting section that sets a modulation and coding scheme based on a plurality of received pieces of channel quality information.

According to another aspect of the invention, an adaptive modulation method has a receiving step of receiving channel quality information transmitted from a communication terminal apparatus, and a setting step of setting a modulation and coding scheme based on a plurality of received pieces of channel quality information.

### Brief Description of Drawings

FIG.1 is a block diagram illustrating a configuration of a base station apparatus according to Embodiment 1 of the present invention;
FIG.2 is a block diagram illustrating an example of a configuration of a communication terminal apparatus that communicates with the base station apparatus according to Embodimetn1 of the present invention;
FIG.3 is a diagram to explain the operation of the base station apparatus and communication terminal apparatus according to Embodiment 1 of the present invention;
FIG.4 is a block diagram illustrating a configuration of a base station apparatus according to Embodiment 2 of the present invention;
FIG.5 is a diagram to explain the operation of the base station apparatus and communication terminal apparatus according to Embodiment 2 of the present invention;
FIG.6 is a diagram to explain channel quality information averaged in the base station apparatus according to Embodiment 2 of the present invention;
FIG.7 is a block diagram illustrating a configuration of a base station apparatus according to Embodiment 3 of the present invention;
FIG.8 is a block diagram illustrating a configuration of a base station apparatus according to Embodiment 4 of the present invention;
FIG.9 is a block diagram illustrating a configuration of a base station apparatus according to Embodiment 5 of the present invention; and
FIG.10 is a block diagram illustrating a configuration of a base station apparatus according to Embodiment 6 of the present invention.

### Best Mode for Carrying Out the Invention

It is a gist of the present invention to set a modulation and coding scheme based on a plurality of pieces of channel quality information transmitted form a communication terminal apparatus.

Embodiments of the present invention will specifically be described below with reference to accompanying drawings.

### (Embodiment 1)

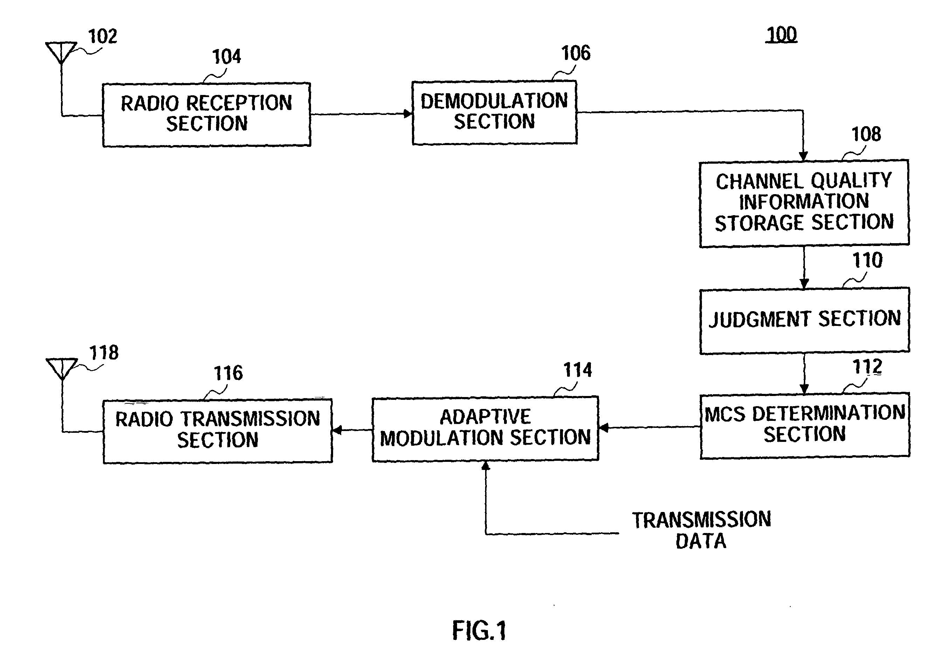

FIG.1 is a block diagram illustrating a configuration of a base station apparatus according to Embodiment 1 of the present invention.

Base station apparatus 100 as shown in FIG.1 has reception antenna 102, radio reception section 104, demodulation section 106, channel quality information storage section 108, judgment section 110, MCS determination section 112, adaptive modulation section 114, radio transmission section 116 and transmission antenna 118.

Radio reception section 104 receives a radio transmission signal including channel quality information via reception antenna 102, and subjects the radio transmission signal to predetermined radio reception processing including processing for downconverting an RF (Radio Frequency) to a baseband signal and analog/digital conversion.

Herein, the channel quality information is information (for example, CQI: CHannel Quality Indicator) successively transmitted from a communication terminal apparatus to base station apparatus 100 communicating with the terminal apparatus, and is information indicating a result of measuring downlink quality (channel quality). More specifically, the channel quality information is information corresponding to a modulation and coding scheme (for example, modulation scheme and coding rate) to request to base station apparatus 100 in order that a downlink transmission rate and/or reception error rate in the communication terminal apparatus is within a desired range. In addition, described later is generation and transmission of the channel quality information in the communication terminal apparatus.

Demodulation section 106 demodulates the radio transmission signal subjected to the radio reception processing, and extracts the channel quality information from the radio transmission signal.

In other words, a combination of radio reception section 104 and demodulation section 106 serves as a reception unit that receives the channel quality information transmitted from the communication terminal apparatus.

Channel quality information storage section 108 stores each piece of channel quality information from demodulation section 106.

Judgment section 110 beforehand stores predetermined number N (N is an integer of two or more) , and judges whether or not consecutively received predetermined number N pieces of channel quality information are the same among a plurality of pieces of channel quality information stored in channel quality information storage section 108.

More specifically, judgment section 110 judges which channel quality is better, a value indicated by channel quality information received at some point in time or a value indicated by channel quality information received later than the some point. For example, channel quality information indicating a value corresponding to a higher modulation level of M-ary modulation is judged as being better in reception quality, or channel quality information indicating a value corresponding to a coding rate with lower error correcting capability (lower degree of redundancy of code) is judged as being better in reception quality, and pieces of channel quality information indicating the same values are omitted from targets for judgment. Then, judgment section 110 judges whether or not the judgment results are the same for N consecutive times.

MCS determination section 112 beforehand stores a table indicating a correspondence relationship between a value of channel quality information and a modulation and coding scheme to output, and determines a modulation and coding scheme according to a result of judgment by judgment section 110. More specifically, when the received channel quality information is the same for N consecutive times, the section 112 determines a modulation and coding scheme, and outputs the modulation and coding scheme corresponding to a value of the channel quality information. Meanwhile, when the received channel quality information is not the same for N consecutive times, the section 112 does not determine a modulation and coding scheme, and outputs the same modulation and coding scheme as the last output modulation and coding scheme.

In other words, a combination of channel quality information storage section 108, judgment section 110 and MCS determination section 112 serves as a setting unit that sets a modulation and coding scheme based on a plurality of received pieces of channel quality information. For example, a modulation and coding scheme is determined when the channel quality information is the same for N consecutive times as a result of judgment by judgment section 110, and thus, setting of the modulation and coding scheme is varied. Meanwhile, a modulation and coding scheme is not determined when the channel quality information is not the same for N consecutive times as a result of judgment by judgment section 110, and thus, setting of the modulation and coding scheme is not varied.

In addition, a table having the same content as that of the above-mentioned table is stored in advance also in the communication terminal apparatus.

Using the set modulation and coding scheme, adaptive modulation section 114 performs predetermined adaptive modulation processing including error correcting coding and modulation on transmission data to transmit to the communication terminal apparatus.

Radio transmission section 116 subjects adaptive modulation processed transmission data (packet), pilot (PL) signal and others to predetermined radio transmission processing including digital/analog conversion and processing for upconverting a baseband signal to an RF signal, and transmits a radio transmission processing processed signal (radio transmission signal) via transmission antenna 118.

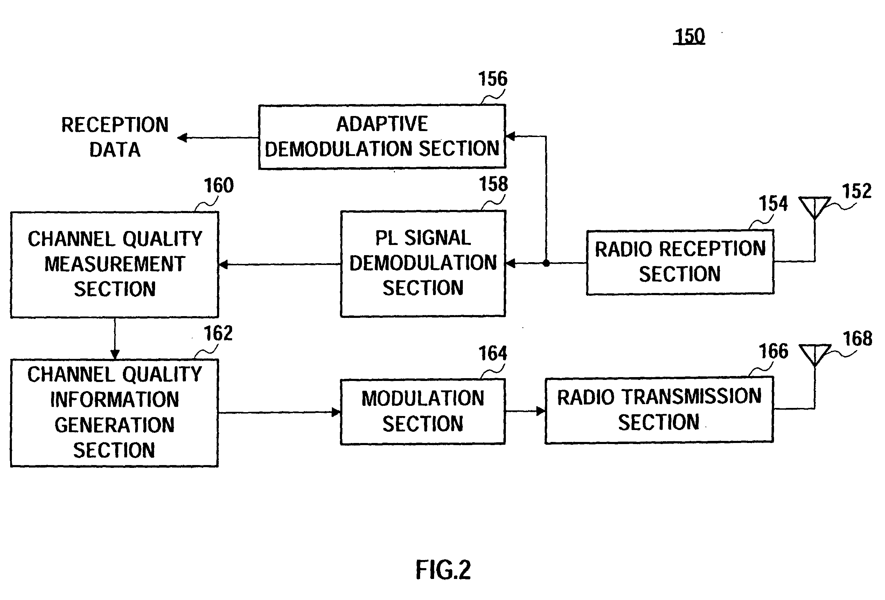

The communication terminal apparatus that communicates with base station apparatus 110 will be described below. FIG.2 is a block diagram illustrating a configuration of the communication terminal apparatus that communicates with base station apparatus 110.

Communication terminal apparatus 150 as shown in FIG.2 has reception antenna 152, radio reception section 154 that performs predetermined reception processing on the radio transmission signal received from base station apparatus 100 via reception antenna 152, adaptive demodulation section 156 that performs predetermined adaptive demodulation processing on transmission data in the radio transmission signal using a modulation and coding scheme determined in base station apparatus 100, PL signal demodulation section 158 that demodulates a pilot signal in the radio transmission signal, channel quality measurement section 160 that measures channel quality (for example, BER: Bit Error Rate) using a result of demodulation of the pilot signal, channel quality information generation section 162 that generates channel quality information based on the measured channel quality, modulation section 164 that modulates the channel quality information, radio transmission section 166 that performs predetermined radio transmission processing on the demodulated channel quality information, and transmission antenna 168.

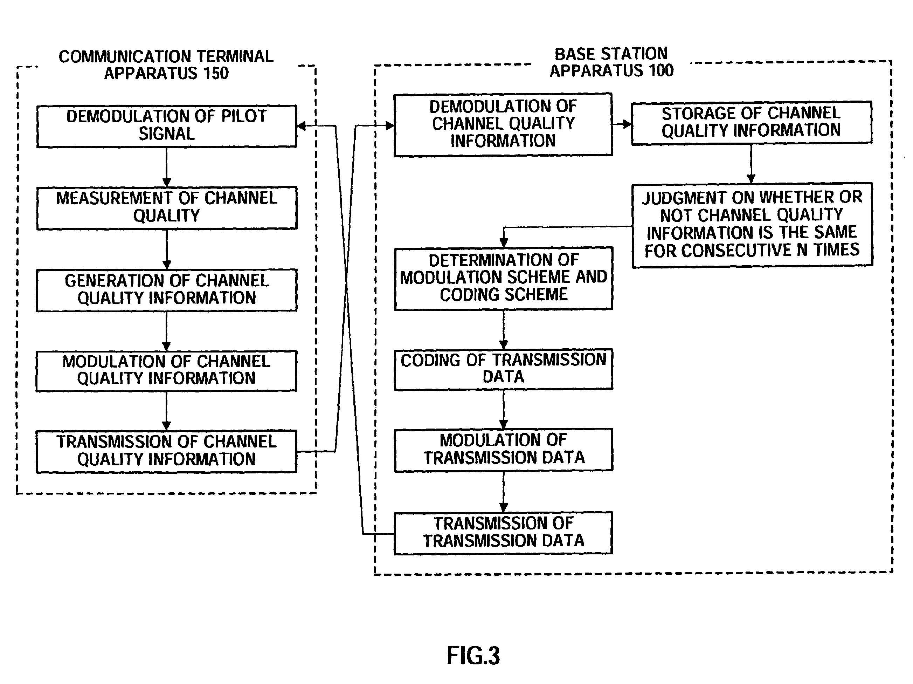

The operation of base station apparatus 100 and communication terminal apparatus 150 with above-mentioned configurations will be described below. FIG. 3 is a diagram to explain the operation of base station apparatus 100 and communication terminal apparatus 150.

First, communication terminal apparatus 150 demodulates a pilot signal in PL signal demodulation section 158.

Then, channel quality measurement section 160 measures channel quality using a result of demodulation of the pilot signal.

Channel quality information generation section 162 generates channel quality information based on the channel quality measured in channel quality measurement section 160. More specifically, using the channel quality as described above, the section 162 selects a modulation and coding scheme to request to base station apparatus 100 so that an error rate (reception error rate) in adaptive demodulation section 156 in communication terminal apparatus 150 and transmission rate are within a desirable range. Then, the section 162 refers to the table indicative of the correspondence relationship between the modulation and coding scheme and a value to transmit as channel quality information, and selects a value corresponding to the selected modulation and coding scheme as channel quality information.

Modulation section 164 performs the predetermined modulation processing on the channel quality information.

Radio transmission section 166 performs the predetermined radio transmission processing on the channel quality information modulated in modulation section 164, and transmits the channel quality information subjected to the radio transmission processing via transmission antenna 168.

In base station apparatus 100, radio reception section 104 receives a radio transmission signal including the channel quality information transmitted from communication terminal apparatus 150 via reception antenna 102, and performs the predetermined radio reception processing on the radio transmission signal.

Demodulation section 106 performs the predetermined demodulation processing on the radio transmission signal subjected to the radio reception processing in radio reception section 104, and extracts the channel quality information from the radio transmission signal subjected to the demodulation processing.

Channel quality information storage section 108 stores the channel quality information (current channel quality information) extracted in demodulation section 106.

Judgment section 110 judges whether or not received channel quality information is the same for N consecutive times among a plurality of pieces of channel quality information stored in channel quality information storage section 108. When the N pieces of channel quality information are the same, the section 110 outputs one of the N pieces of channel quality information as a current result of the judgment. The channel quality information output from among the N pieces of channel quality information is, for example, of the worst channel quality among the N pieces of channel quality information, or channel quality information corresponding to an average value of the N pieces of channel quality information. Meanwhile, when the N pieces of channel quality information are not the same, the section 110 outputs the last output result of the judgment as a current result of the judgment. In other words, when consecutive pieces of channel quality information are not the same, channel quality indicated in the channel quality information is regarded as being momentary, and omitted from targets used in the processing in MCS determination section 112.

MCS determination section 112 determines a modulation and coding scheme according to the result of the judgment output from judgment section 110. More specifically, the section 112 refers to the table indicating the correspondence relationship between a value indicated in the channel quality information and a modulation and coding scheme to output, and outputs the modulation and coding scheme corresponding to the value of the channel quality information output as the result of the judgment from judgment section 110. Thus, the modulation and coding scheme is set by the aforementioned processing in judgment section 110 and MCS determination section 112.

Using the set modulation and coding scheme, adaptive modulation section 114 performs the predetermined adaptive modulation processing on transmission data to transmit to communication terminal apparatus 150.

Radio transmission section 116 performs the predetermined radio transmission processing on transmission data (packet), pilot (PL) signal and others subjected to the adaptive modulation processing in adaptive modulation section 114, and transmits a radio transmission processing processed signal (radio transmission signal) via transmission antenna 118.

The radio transmission signal transmitted from base station apparatus 100 is received in communication terminal apparatus 150. The aforementioned operation is repeated, as long as base station apparatus 100 and communication terminal apparatus 150 continue to communicate with each other.

Thus, according to this Embodiment, it is judged whether or not consecutively received predetermined number N pieces of channel quality information are the same among a plurality of pieces of channel quality information from the communication terminal apparatus, and according to a result of the judgment, a modulation and coding scheme is determined. For example, when N pieces of channel quality information are the same, determination of modulation and coding scheme is performed. Meanwhile, when N pieces of channel quality information are not the same, determination of modulation and coding scheme is not performed. Accordingly, it is possible to set a modulation and coding scheme while eliminating momentary variations in channel quality for a period of time shorter than a period during which N pieces of channel quality information are received. It is thus possible to set a modulation and coding scheme only in response to stationary like variations in channel quality.

### (Embodiment 2)

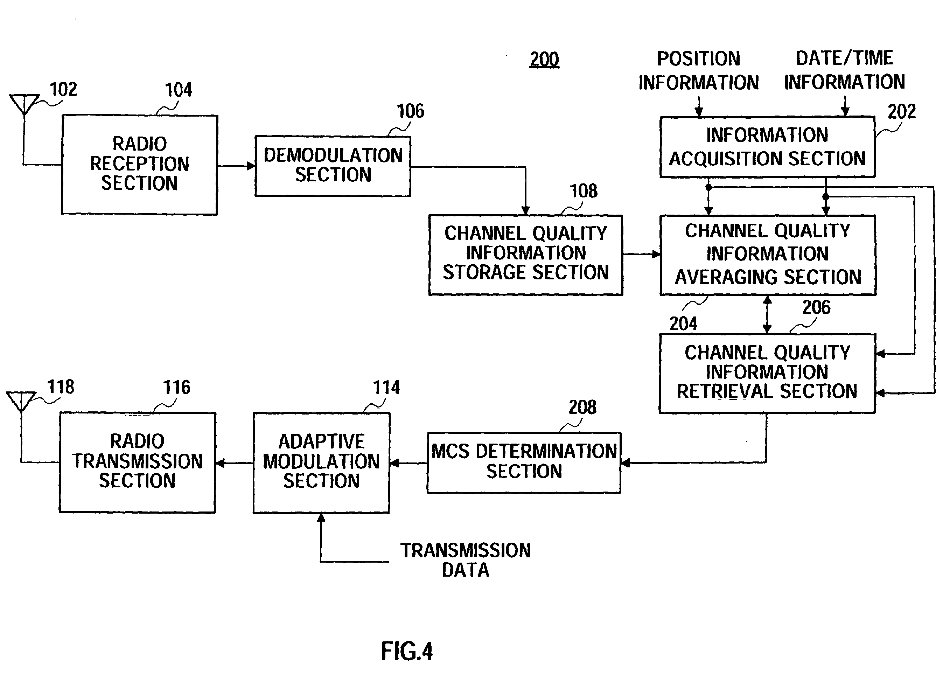

FIG.4 is a block diagram illustrating a configuration of a base station apparatus according to Embodiment 2 of the present invention. In addition, the base station apparatus according to Embodiment 2 has a basic configuration similar to that of base station apparatus 100 as described in Embodiment 1, and the same structural elements are assigned the same reference numerals to omit descriptions thereof.

It is a feature of this Embodiment that the base station apparatus averages a plurality of pieces of channel quality information from a communication terminal apparatusforeach position of the communication terminal apparatus of the time each piece of the channel quality information is transmitted, and according to the averaged channel quality information, determines a modulation and coding scheme.

Base station apparatus 200 as shown in FIG.4 has the same configuration as that of base station apparatus 100 as shown in FIG.1 except that judgment section 110 and MCS determination section 112 are eliminated and that information acquisition section 202, channel quality information averaging section 204, channel quality information retrieval section 206 and MCS determination section 208 are provided.

Information acquisition section 202 acquires position information indicative of a position of a communication terminal apparatus when the communication terminal apparatus transmits channel quality information to base station apparatus 200. Further, the section 202 acquires date/time information indicative of the date and time when the communication terminal apparatus transmits channel quality information to base station apparatus 200. Furthermore, the section 202 may acquire day-of-the-week information indicative of a day of the week when the communication terminal apparatus transmits channel quality information to base station apparatus 200.

Channel quality information averaging section 204 averages a plurality of pieces of channel quality information stored in channel quality information storage section 108 for each position indicated by the position information acquired by information acquisition section 202. Further, the section 204 stores the averaged channel quality information for each position.

In addition, channel quality information averaging section 204 may average a plurality of pieces of channel quality information stored in channel quality information storage section 108 for each combination of a position indicated by the position information and time indicated by the date/time information acquired by information acquisition section 202. In this case, the section 204 stores the averaged channel quality information for each combination of the position and time.

Further, channel quality information averaging section 204 may average a plurality of pieces of channel quality information stored in channel quality information storage section 108 for each combination of a position indicated by the position information and date indicated by the date/time information acquired by information acquisition section 202. In this case, the section 204 stores the averaged channel quality information for each combination of the position and date.

Furthermore, when the day-of-the-week information is acquired by information acquisition section 202, channel quality information averaging section 204 may average a plurality of pieces of channel quality information stored in channel quality information storage section 108 for each combination of a position indicated by the position information and day of the week indicated by the day-of-the-week information. In this case, the section 204 stores the averaged channel quality information for each combination of the position and day of the week.

Moreover, channel quality information averaging section 204 may execute the operation of a combination of the aforementioned averaging processing. In other words, channel quality information averaging section 204 executes the operation for averaging a plurality of pieces of channel quality information stored in channel quality information storage section 108 at least for each position.

Based on the position information from information acquisition section 202, channel quality information retrieval section 206 retrieves channel quality information corresponding to a position of the time the communication terminal apparatus transmits current channel quality information to base station apparatus 200, from the channel quality information averaged for each position in channel quality information averaging section 204.

Further, when information acquisition section 202 acquires the date/time information in addition to the position information, channel quality information retrieval section 206 may retrieve channel quality information corresponding to a combination of a position and time when the communication terminal apparatus transmits current channel quality information to base station apparatus 200, from the channel quality information averaged for each combination of the position and time in channel quality information averaging section 204.

Furthermore, when information acquisition section 202 acquires the day-of-the-week information in addition to the position information, channel quality information retrieval section 206 may retrieve channel quality information corresponding to a combination of a position and day of the week when the communication terminal apparatus transmits current channel quality information to base station apparatus 200, from the channel quality information averaged for each combination of the position and day of the week in channel quality information averaging section 204.

MCS determination section 208 beforehand stores a table indicating a correspondence relationship between a value of channel quality information and a modulation and coding scheme to output, and determines a modulation and coding scheme to output by referring to the channel quality information retrieved by channel quality information retrieval section 206. Thus, the section 208 outputs a modulation and coding scheme corresponding to the value of the channel quality information.

In other words, a combination of channel quality information storage section 108, information acquisition section 202, channel quality information averaging section 204, channel quality information retrieval section 206 and MCS determination section 208 serves as a setting unit that sets a modulation and coding scheme based on a plurality of received pieces of channel quality information.

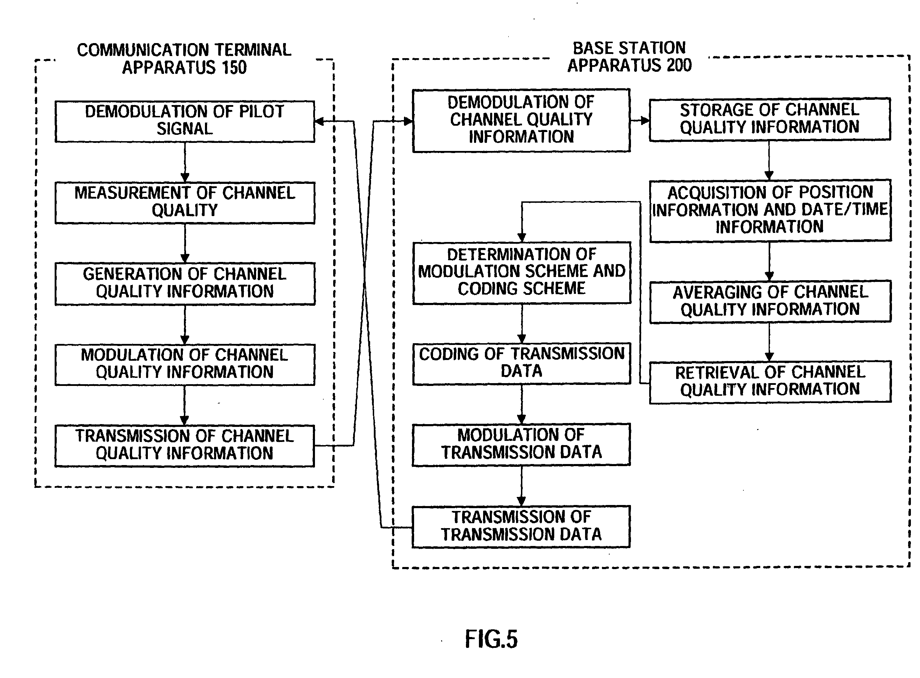

The operation will be described below when base station apparatus 200 with the aforementioned configuration communicates with communication terminal apparatus 150 as described in Embodiment 1. FIG.5 is a diagram to explain the operation of base station apparatus 200 and communication terminal apparatus 150. In addition, the operation in communication terminal apparatus 150 is the same as described in Embodiment 1, and descriptions thereof are omitted.

In base station apparatus 200, radio reception section 104 receives a radio transmission signal including the channel quality information transmitted from communication terminal apparatus 150 via reception antenna 102, and performs predetermined radio reception processing on the radio transmission signal.

Demodulation section 106 performs predetermined demodulation processing on the radio transmission signal subjected to the radio reception processing in radio reception section 104, and extracts the channel quality information from the radio transmission signal subjected to the demodulation processing.

Channel quality information storage section 108 stores the channel quality information (current channel quality information) extracted in demodulation section 106.

Information acquisition section 202 acquires the position information and date/time information. In addition, information acquisition, section 202 may acquire the position information and date/time information concurrently to reception of corresponding channel quality information.

Channel quality information averaging section 204 averages a plurality of pieces of channel quality information stored in channel quality information storage section 108 at least for each position indicated by the position information.

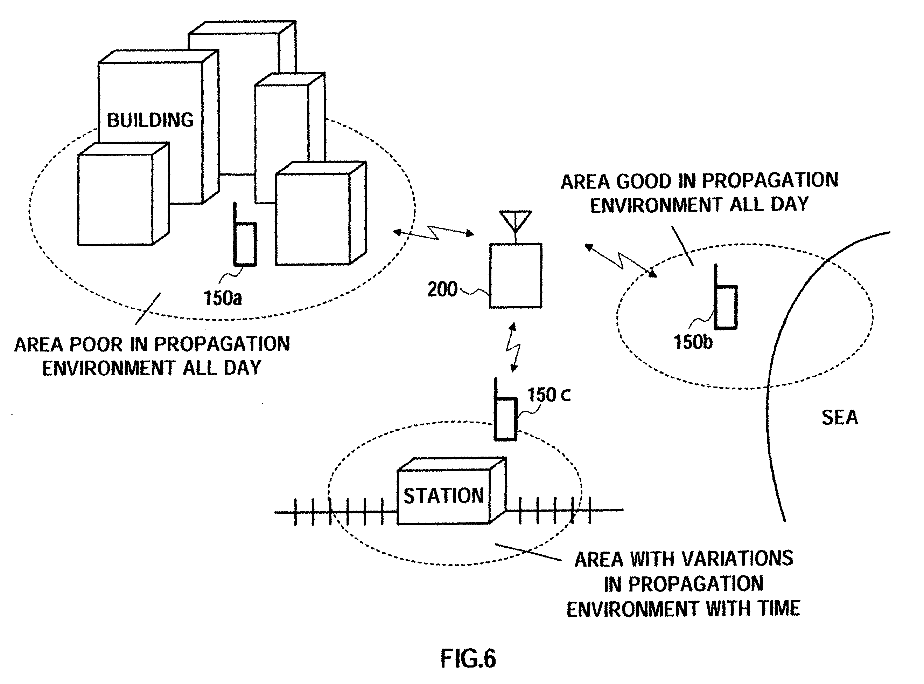

An example will be described below of the operation for channel quality information averaging section 204 to average a plurality of pieces of channel quality information at least for each position. FIG.6 is a diagram to explain the channel quality information to average. Herein, descriptions are made on the assumption that base station apparatus 200 is located at the midpoint place among an urban area, coast and station or tracks.

The urban area is a built-up area and poor in propagation environment all day. Therefore, channel quality information transmitted to base station apparatus 200 from communication terminal apparatus 150a positioned in the urban area often indicates relatively low channel quality. Accordingly, the channel quality information obtainedby averaging has a value indicative of low channel quality.

The coast is an area good in propagation environment all day, because shields against radio transmission signals hardly exist on the coast. Therefore, channel quality information transmitted to base station apparatus 200 from communication terminal apparatus 150b positioned on the coast often indicates relatively high channel quality. Accordingly, the channel quality information obtained by averaging has a value indicative of high channel quality.

A place near a station or tracks is an area where the propagation environment varies with time. Therefore, the indication of channel quality information transmitted to base station apparatus 200 from communication terminal apparatus 150c positioned near the station or tracks varies between relatively high and low channel quality with the transmission time. More specifically, during rush hours, the channel quality information obtained by averaging has a value indicative of low channel quality. Meanwhile, during hours except rush hours, the channel quality information obtained by averaging has a value indicative of high channel quality.

Channel quality information retrieval section 206 retrieves channel quality information corresponding to at least a position of the time communication terminal apparatus 150 transmits current channel quality information, from the channel quality information averaged for each position in channel quality information averaging section 204.

MCS determination section 208 determines a modulation and coding scheme to output by referring to the channel quality information retrieved in channel quality information retrieval section 206. Thus, by the aforementioned processing in information acquisition section 202, channel quality information averaging section 204, channel quality information retrieval section 206 and MCS determination section 208, a modulation and coding scheme is set.

Using the set modulation and coding scheme, adaptive modulation section 114 performs predetermined adaptive modulation processing on transmission data to transmit to communication terminal apparatus 150.

Radio transmission section 116 performs predetermined radio transmission processing on transmission data (packet), pilot (PL) signal and others subjected to the adaptive modulation processing in adaptive modulation section 114, and transmits a radio transmission processing processed signal (radio transmission signal) via transmission antenna 118.

The radio transmission signal transmitted from base station apparatus 200 is received in communication terminal apparatus 150. The aforementioned operation is repeated, as long as base station apparatus 200 and communication terminal apparatus 150 continue to communicate with each other.

Thus, according to this Embodiment, a plurality of received pieces of channel quality information are averaged for each position of a communication terminal apparatus of the time each of the plurality of pieces of channel quality information is transmitted, and according to the averaged channel quality information, a modulation and coding scheme is determined. In other words, a modulation and coding scheme is determined according to the channel quality information derived from the statistical method. Accordingly, setting of modulation and coding scheme can be carried out while eliminating momentary channel quality indicated by each piece of the received channel quality information. It is thus possible to set a statistically optimal modulation and coding scheme with respect to a position of a communication terminal apparatus. It is thereby possible to stabilize a transmission rate at a statistically optimal level.

### (Embodiment 3)

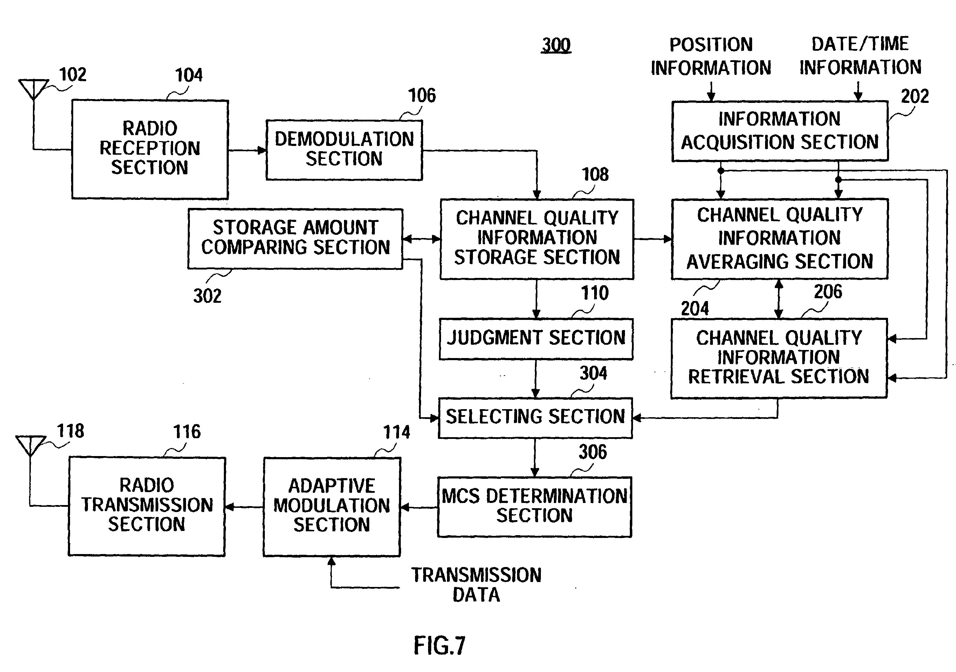

FIG.7 is a block diagram illustrating a configuration of a base station apparatus according to Embodiment 3 of the present invention. In addition, the base station apparatus according to Embodiment 3 has a basic configuration similar to that of base station apparatus 100 as described in Embodiment 1, and the same structural elements are assigned the same reference numerals to omit descriptions thereof.

It is a feature of this Embodiment that the base station apparatus selects either one from a result of judgment on whether or not a predetermined number of consecutively received pieces of channel quality information are the same among a plurality of pieces of channel quality information from a communication terminal apparatus, and channel quality information averaged for each position of the communication terminal apparatus of the time each of the channel quality information is transmitted, corresponding to a result of comparison between a storage amount of the channel quality information and a predetermined threshold, and according to the selected either one, determines a modulation and coding scheme.

Base station apparatus 300 as shown in FIG.7 has the same configuration as that of base station apparatus 100 as shown in FIG. 1 except that information acquisition section 202, channel quality information averaging section 204 and channel quality information retrieval section 206 are provided as in base station apparatus 200 shown in FIG.4 (Embodiment 2), storage amount comparing section 302 and selecting section 304 are added, and that MCS determination section 306 is further provided, substituting for MCS determination section 112.

Storage amount comparing section 302 detects a storage amount of the channel quality information stored in channel quality information storage section 108, compares the storage amount with a predetermined threshold that is beforehand stored, and outputs a result of the comparison.

Corresponding to a result of the comparison in storage amount comparing section 302, selecting section 304 selects either a result of the judgment in judgment section 110 or the channel quality information retrieved by channel quality information retrieval section 206 among the channel quality information averaged by channel quality information averaging section 204.

More specifically, the section 304 selects a result of the judgment when the storage amount is less than the threshold. Meanwhile, when the storage amount is more than or equal to the threshold, the section 304 selects the retrieved channel quality information among the averaged channel quality information.

MCS determination section 306 beforehand stores a table indicating a correspondence relationship between a value of channel quality information and a modulation and coding scheme to output. Further, the section 306 determines a modulation and coding scheme to output by referring to either information selected by selecting section 304, the channel quality information output from judgment section 110 as a result of the judgment or the channel quality information retrieved by channel quality information retrieval section 206. Thus, the section 306 outputs a modulation and coding scheme corresponding to the value the channel quality information.

In other words, a combination of channel quality information storage section 108, judgment section 110, information acquisition section 202, channel quality information averaging section 204, channel quality information retrieval section 206, storage amount comparing section 302, selecting section 304 and MCS determination section 306 serves as a setting unit that sets a modulation and coding scheme based on a plurality of received pieces of channel quality information.

Thus, according to this Embodiment, either one is selected from a result of judgment on whether or not consecutively received predetermined number N pieces of channel quality information are the same among a plurality of received pieces of channel quality information of channel quality, and the channel quality information averaged for each position of a communication terminal apparatus of the time each of the plurality of channel quality information is transmitted, corresponding to a result of comparison between a storage amount of the channel quality information and a predetermined threshold, and according to the selected either one, a modulation and coding scheme is determined. Accordingly, it is possible to determine a modulation and coding scheme according to a result of the judgment when the storage amount is less than a threshold, or according to the averaged channel quality when the storage amount is more than or equal to the threshold. It is thus possible to transmit packets always using a modulation and coding scheme suitable for channel quality even when a storage amount of channel quality information is insufficient, thereby enabling improved throughput in the radio communication system.

### (Embodiment 4)

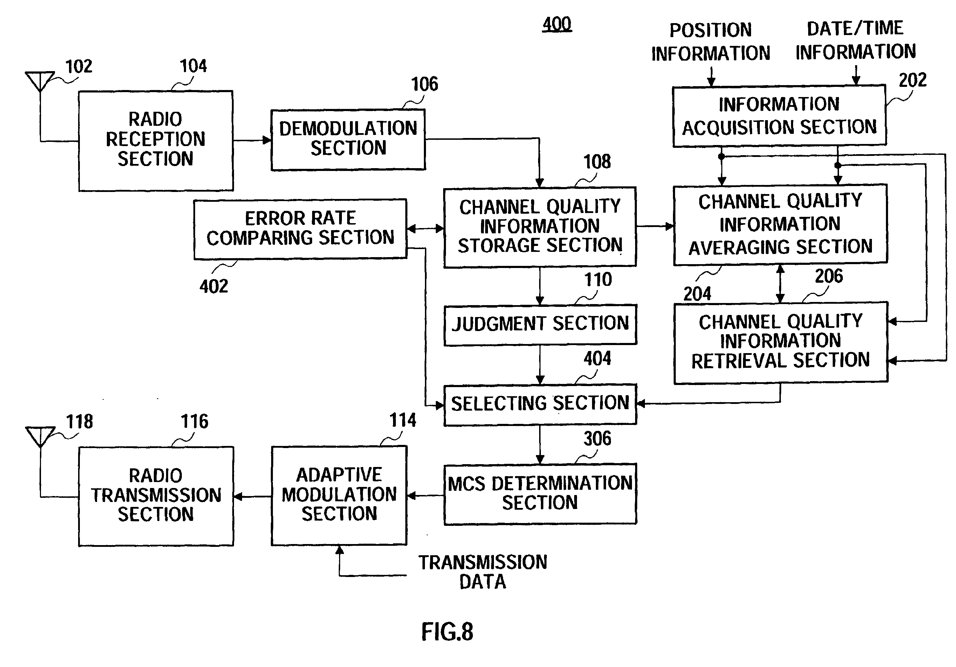

FIG.8 is a block diagram illustrating a configuration of a base station apparatus according to Embodiment 4 of the present invention. In addition, the base station apparatus according to Embodiment 4 has a basic configuration similar to that of base station apparatus 100 as described in Embodiment 1, and the same structural elements are assigned the same reference numerals to omit descriptions thereof.

It is a feature of this Embodiment that the base station apparatus selects either one from a result of judgment on whether or not a predetermined number of consecutively received pieces of channel quality information are the same among a plurality of pieces of channel quality information from a communication terminal apparatus, and channel quality information averaged for each position of the communication terminal apparatus of the time each of the channel quality information is transmitted, corresponding to a result of comparison between a reception error rate of the channel quality information and a predetermined threshold, and according to the selected either one, determines a modulation and coding scheme.

Base station apparatus 400 as shown in FIG.8 has the same configuration as that of base station apparatus 100 as shown in FIG.1 except that information acquisition section 202, channel quality information averaging section 204 and channel quality information retrieval section 206 are provided as in base station apparatus 200 shown in FIG.4 (Embodiment 2), error rate comparing section 402 and selecting section 404 are added, and that MCS determination section 306 is provided as in base station apparatus 300 shown in FIG.7 (Embodiment 3), substituting for MCS determination section 112.

Error rate comparing section 402 detects a reception error rate (for example, BER) of channel quality information demodulated in demodulation section 106, compares the detected reception error rate with a predetermined threshold that is beforehand stored, and outputs a result of the comparison.

Corresponding to a result of the comparison in error rate comparing section 402, selecting section 404 selects either one from a result of the judgment in judgment section 110 and the channel quality information retrieved by channel quality information retrieval section 206 among channel quality information averaged by channel quality information averaging section 204.

More specifically, the section 404 selects the retrieved channel quality information among the averaged channel quality information when the reception error rate is more than or equal to the threshold. Meanwhile, the section 404 selects a result of the judgment when the reception error rate is less than the threshold.

A combination of channel quality information storage section 108, judgment section 110, information acquisition section 202, channel quality information averaging section 204, channel quality information retrieval section 206, error rate comparing section 402, selecting section 404 and MCS determination section 306 serves as a setting unit that sets a modulation and coding scheme based on a plurality of received pieces of channel quality information.

Thus, according to this Embodiment, either one is selected from a result of judgment on whether or not consecutively received predetermined number N pieces of channel quality information are the same among a plurality of pieces of received channel quality information of channel quality, and channel quality information averaged for each position of a communication terminal apparatus of the time each of the plurality of channel quality information is transmitted, corresponding to a result of comparison between a reception error rate of the channel quality information and a predetermined threshold, and according to the selected either one, a modulation and coding scheme is determined. Accordingly, it is possible to determine a modulation and coding scheme according to a result of the judgment when a reception error rate is less than a threshold, or according to the averaged channel quality when a reception error rate is more than or equal to the threshold. It is thus possible to transmit packets always using a modulation and coding scheme suitable for channel quality even when reliability of received channel quality information is low, thereby enabling improved throughput in the radio communication system.

### (Embodiment 5)

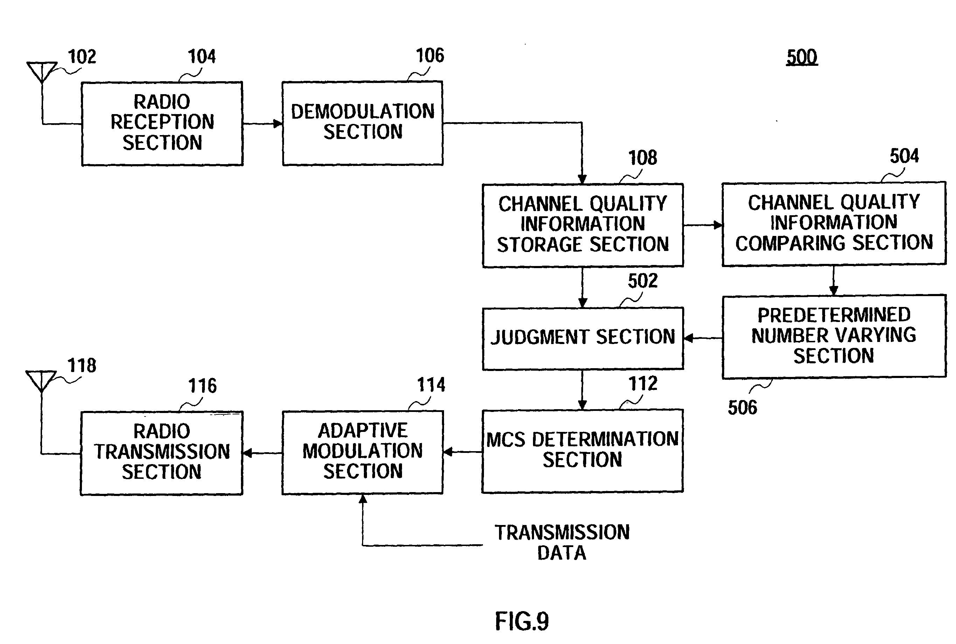

FIG.9 is a block diagram illustrating a configuration of a base station apparatus according to Embodiment 5 of the present invention. In addition, the base station apparatus according to Embodiment 5 has a basic configuration similar to that of base station apparatus 100 as described in Embodiment 1, and the same structural elements are assigned the same reference numerals to omit descriptions thereof.

It is a feature of this Embodiment that the base station apparatus compares channel quality information received at a predetermined point in time with channel quality information received later than the predetermined point among a plurality of pieces of channel quality information from a communication terminal apparatus, and corresponding to a result of the comparison, varies a predetermined number in the judgment on whether or not a predetermined number of consecutively received pieces of channel quality information are the same.

Base station apparatus 500 as shown in FIG.9 has the same configuration as that of base station apparatus 100 as shown in FIG.1 except that judgment section 502 is provided as a substitute for judgment section 110, and that channel quality information comparing section 504 and predetermined number varying section 506 are further added.

Judgment section 502 beforehand stores predetermined number Na (Na is an integer of two or more) and predetermined number Nb (Nb is an integer of three or more, Nb>Na), and judges whether or not predetermined number Na or Nb pieces of channel quality information consecutively transmitted from a communication terminal apparatus are the same among a plurality of pieces of channel quality information stored in channel quality information storage section 108.

More specifically, judgment section 502 first judges which channel quality is better, a value indicated by channel quality information received at some point in time or a value indicated by channel quality information received later than the some point. For example, channel quality information indicating a value corresponding to a higher modulation level of M-ary modulation is judged as being better in channel quality, or channel quality information indicating a value corresponding to a coding rate with lower error correcting capability (lower degree of redundancy of code) is judged as being better in channel quality, and pieces of channel quality information indicating the same values are omitted from targets for judgment. Then, judgment section 502 judges whether or not the judgment results are the same for Na or Nb consecutive times.

Further, judgment section 502 switches between predetermined number Na and predetermined number Nb used in the judgment, according to an instruction from predetermined number varying section 506.

Channel quality information comparing section 504 compares channel quality information received at a predetermined point in time with channel quality information received later than the predetermined point, and outputs the result.

Corresponding to a result of the comparison in channel quality information comparing section 504, predetermined number varying section 506 varies between predetermined number Na and predetermined number Nb for use in judgment section 502. More specifically, the section 506 outputs an instruction for instructing judgment section 502 to use predetermined number Nb when a result of the comparison indicates that channel quality indicated by the channel quality information transmitted later than the predetermined point is better than channel quality indicated by the channel quality information transmitted at the predetermined point. Meanwhile, the section 506 outputs an instruction for instructing judgment section 502 to use predetermined number Na when a result of the comparison indicates that channel quality indicated by the channel quality information transmitted later than the predetermined point is worse than channel quality indicated by the channel quality information transmitted at the predetermined point.

A combination of channel quality information storage section 108, judgment section 502, channel quality information comparing section 504, predetermined number varying section 506 and MCS determination section 112 serves as a setting unit that sets a modulation and coding scheme based on a plurality of received pieces of channel quality information.

Thus, according to this Embodiment, channel quality information received at a predetermined point in time is compared with channel quality information received later than the predetermined point among a plurality of received pieces of channel quality information, and corresponding to a result of the comparison, predetermined numbers Na and Nb are varied. For example, it is possible to use predetermined number Nb when channel quality indicated by the channel quality information later than the predetermined point is better than channel quality at the predetermined point, while using predetermined number Na smaller than predetermined number Nb when channel quality indicated by the channel quality information later than the predetermined point is worse than channel quality at the predetermined point. Accordingly, it is possible to follow variations in channel quality faster in the case where the channel quality becomes worse than in the case where the channel equalitybecomes better, and it is thus possible to perform so-called failsafe control.

### (Embodiment 6)

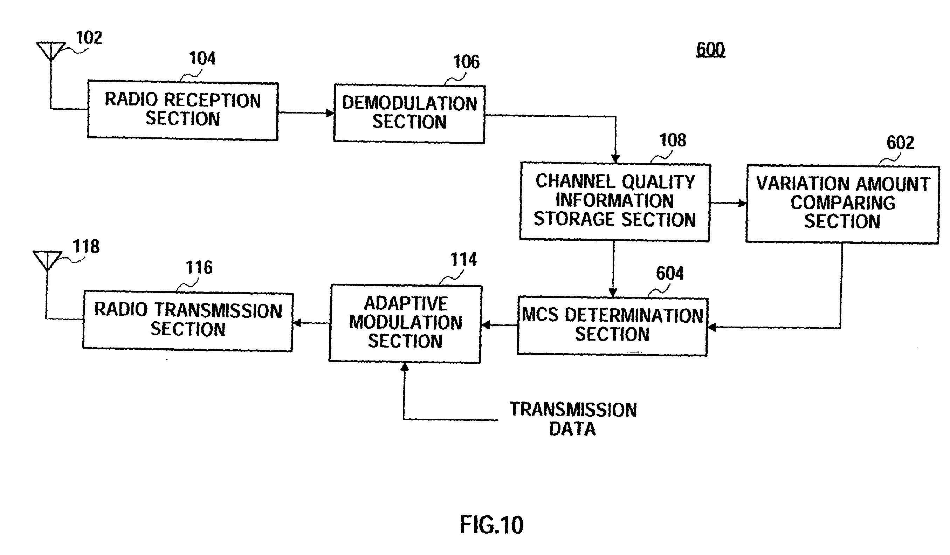

FIG.10 is a block diagram illustrating a configuration of a base station apparatus according to Embodiment 6 of the present invention. In addition, the base station apparatus according to Embodiment 6 has a basic configuration similar to that of base station apparatus 100 as described in Embodiment 1, and the same structural elements are assigned the same reference numerals to omit descriptions thereof.

It is a feature of this Embodiment that the base station apparatus compares, with a predetermined threshold, an amount of variation in consecutively received two pieces of channel quality information among a plurality of pieces of channel quality information from a communication terminal apparatus, and according to a result of the comparison, determines a modulation and coding scheme.

Base station apparatus 600 as shown in FIG.10 has the same configuration as that of base station apparatus 100 as shown in FIG.1 except that judgment section 110 is eliminated, variation amount comparing section 602 is added, and that MCS determination section 604 is further provided as a substitute for MCS determination section 112.

Variation amount comparing section 602 compares, with a predetermined threshold that is beforehand stored, a difference, i.e. an amount of variation, between last channel quality information and current channel quality information received from a communication terminal apparatus among the channel quality information stored in channel quality information storage section 108, and outputs a result of the comparison.

MCS determination section 604 beforehand stores a table indicating a correspondence relationship between a value of channel quality information and a modulation and coding scheme to output, and determines a modulation and coding scheme according to a result of comparison by variation amount comparing section 602. More specifically, when the amount of variation is more than or equal to the threshold, the section 604 does not determine a modulation and coding scheme based on the current channel quality information, and outputs the same modulation and coding scheme as the last output modulation and coding scheme. Meanwhile, when the amount of variation is less than the threshold, the section 604 determines a modulation and coding scheme based on the current channel quality information, and outputs the modulation and coding scheme corresponding to the value of the current channel quality information.

A combination of channel quality information storage section 108, variation amount comparing section 602 and MCS determination section 604 serves as a setting unit that sets a modulation and coding scheme based on a plurality of received pieces of channel quality information.

Thus, according to this Embodiment, in addition to the effects in Embodiment 1, a threshold is compared with an amount of variation in current and last channel quality information consecutively received from a communication terminal apparatus among a plurality of received pieces of channel quality information, and according to a result of the comparison, a modulation and coding scheme is determined. Therefore, it is possible to avoid determination of modulation and coding scheme based on current channel quality information when an amount of variation is more than or equal to the threshold. It is thus possible to set a modulation and coding scheme while eliminating variations in channel quality considered as having impossibility to follow, and channel quality indicated by channel quality information considered as having low reliability.

As described above, according to the present invention, it is possible to transmit packets always using a modulation and coding scheme suitable for channel quality, and increase the throughput in the radio communication system.

This application is based on the Japanese Patent Application No.2003-104405 filed on April 8, 2003, entire content of which is expressly incorporated by reference herein.

### Industrial Applicability

The base station apparatus and adaptive modulation method of the present invention have effects of transmitting packets always using a modulation and coding scheme suitable for channel quality, and increasing the throughput in the radio communication system, and are useful in a radio communication system where high speed downlink packet transmission is carried out.

## Claims

1. A base station apparatus comprising:
a receiver that receives channel quality information transmitted from a communication terminal apparatus; and
a setter that sets a modulation and coding scheme based on a plurality of received pieces of channel quality information.

2. The base station apparatus according to claim 1, wherein the setter comprises:
a judger that judges whether or not a predetermined number of consecutively received pieces of channel quality information are the same among the plurality of received pieces of channel quality information; and
a determiner that determines a modulation and coding scheme according to a result of judgment.

3. The base station apparatus according to claim 1, wherein the setter comprises:
a storage that stores the plurality of received pieces of channel quality information;
an acquire that acquires position information indicative of a position of the communication terminal apparatus of the time each of the plurality of received pieces of channel quality information is transmitted;
an averaging section that averages the plurality of pieces of channel quality information stored, for each position indicated in the position information acquired; and
a determiner that determines a modulation and coding scheme according to the channel quality information averaged.

4. The base station apparatus according to claim 1, wherein the setter comprises:
a judger that judges whether or not a predetermined number of consecutively received pieces of channel quality information are the same among the plurality of received pieces of channel quality information;
a storage that stores the plurality of received pieces of channel quality information;
an acquire that acquires position information indicative of a position of the communication terminal apparatus of the time each of the plurality of received pieces of channel quality information is transmitted;
an averaging section that averages the plurality of pieces of channel quality information stored, for each position indicated in the position information acquired;
a comparator that compares with a predetermined threshold, an amount of storage of the stored channel quality information ;
a selector that selects either one from a result of judgment and the channel quality information averaged, corresponding to a result of comparison; and
a determiner that determines a modulation and coding scheme according to the either one selected.

5. The base station apparatus according to claim 1, wherein the setter comprises:
a judger that judges whether or not a predetermined number of consecutively received pieces of channel quality information are the same among the plurality of received pieces of channel quality information;
a storage that stores the plurality of received pieces of channel quality information;
an acquire that acquires position information indicative of a position of the communication terminal apparatus of the time each of the plurality of received pieces of channel quality information is transmitted;
an averaging section that averages the plurality of pieces of channel quality information stored, for each position indicated in the position information acquired;
a comparator that compares with a predetermined threshold, a reception error rate of the received channel quality information;
a selector that selects either one from a result of judgment and the channel quality information averaged, corresponding to a result of comparison; and
a determiner that determines a modulation and coding scheme according to the either one selected.

6. The base station apparatus according to claim 2, wherein the setter comprises:
a comparator that compares channel quality information received at a predetermined point in time with channel quality information received later than the predetermined point among the plurality of received pieces of channel quality information; and
a varying section that varies the predetermined number corresponding to a result of comparison.

7. The base station apparatus according to claim 1, wherein the setter comprises:
a comparator that compares with a predetermined threshold, an amount of variation in consecutively received two pieces of channel quality information among the plurality of received pieces of channel quality information; and
a determiner that determines a modulation and coding scheme according to a result of comparison.

8. An adaptive modulation method comprising:
a receiving step of receiving channel quality information transmitted from a communication terminal apparatus; and
a setting step of setting a modulation and coding scheme based on a plurality of received pieces of channel quality information.
